# EUROPEAN PATENT APPLICATION

(11) **EP 4 741 520 A1**
(43) Date of publication of application: **13.05.2026**
(21) Application number: 24836088.5
(22) Date of filing: 03.07.2024
(51) Int. Cl.: C22B 26/12, C22B 1/02, C22B 3/02, C22B 3/06, C22B 3/20, C22B 3/44

(54) **LITHIUM RECOVERY METHOD AND LITHIUM RECOVERY DEVICE**

(30) Priority: 03.07.2023 JP 2023109269
(71) Applicant: Mitsubishi Materials Corporation, Tokyo 100-8117 (JP)
(72) Inventor: SATO Ryosuke, Iwaki-shi, Fukushima 971-8101 (JP); MURAOKA Hiroki, Iwaki-shi, Fukushima 971-8101 (JP)
(74) Representative: Gille Hrabal Partnerschaftsgesellschaft mbB Patentanwälte
(86) International application number: PCT/JP2024/024151
(87) International publication number: WO 2025/009576

(57) **Abstract**

According to the present invention, there are provided a lithium recovery method including a leaching step of adding an acidic solution containing an inorganic acid to a lithium-containing raw material and leaching lithium into the acidic solution, a precipitation step of neutralizing a first slurry obtained in the leaching step to obtain a precipitate substance, a solid-liquid separation step of performing solid-liquid separation on a second slurry obtained in the precipitation step, a washing step of washing a solid phase obtained in the solid-liquid separation step with a washing liquid, and a recycling step of reusing a post-washing liquid obtained in the washing step in either or both of the leaching step and the precipitation step, and a lithium recovery device. Further, the lithium recovery method and the lithium recovery device enable improvement of a recovery rate of lithium while impurities are reduced in a case where lithium is recovered from a lithium ion battery calcined product (black mass).

## Description

### TECHNICAL FIELD

The present invention relates to a lithium recovery method and a lithium recovery device.

Priorities are claimed on Japanese Patent Application No. 2023-109269, filed July 3, 2023 and Japanese Patent Application No. 2024-107349, filed July 3, 2024, the contents of which are incorporated herein by reference.

### BACKGROUND ART

In recent years, due to an increase in demand for lithium ion batteries, there is a concern about the depletion of lithium resources. Therefore, it has been considered to recover lithium from a lithium ion battery that is discarded due to the product life or the like and to reuse the recovered lithium.

In a case of recovering lithium from a lithium ion battery, it is common to use a lithium ion battery calcined product obtained by calcining and pulverizing a lithium ion battery, which is a so-called black mass, as a recycling raw material.

As a method of recovering lithium from a lithium ion battery calcined product, for example, Patent Document 1 discloses a method of adding water and an inorganic acid to a black mass to adjust the pH to be in a range of 3 to 10 and leaching water-soluble lithium in the black mass into water to recover lithium.

Patent Document 2 discloses a method of leaching a black mass containing lithium aluminate in an acidic solution to recover lithium by focusing on lithium aluminate contained in the black mass.

### Citation List

### Patent Documents

Patent Document 1: Japanese Patent No. 5791917(B)
Patent Document 2: Japanese Patent No. 6998241(B)

### SUMMARY OF INVENTION

### Technical Problem

In order to recover lithium from the black mass, lithium is usually leached from the black mass using water or an acidic solution.

In the lithium recovery method disclosed in Patent Document 1, the pH is selected to prevent manganese, nickel, and cobalt in the black mass from being eluted together with lithium, and water-soluble lithium is leached into water. However, the method of Patent Document 1 has a problem in that the leaching rate of lithium into water is low for a lithium compound that is sparingly soluble in water, such as lithium fluoride (LiF) in the black mass.

In Patent Document 1, it is examined that a lithium leaching step is repeatedly performed by adding a black mass to an obtained leachate in order to improve the lithium concentration in the leachate. However, the method of Patent Document 1 has a problem in that the recovery rate of lithium from the black mass is not improved.

The lithium aluminate described in Patent Document 2 is sparingly soluble in water. In Patent Document 2, an acidic solution having a pH in a range of 1 to 6 is used to leach lithium aluminate from a black mass. The method of Patent Document 2 has a problem in that the leachate contains not only lithium but also valuable metals such as cobalt and aluminum. Therefore, in Patent Document 2, the leachate is neutralized to precipitate valuable metals such as cobalt and aluminum.

However, the method of Patent Document 2 also has a problem in that the recovery rate of lithium from the black mass is not sufficient.

The present invention has been made in consideration of the above-described circumstances, and an object thereof is to provide a lithium recovery method and a lithium recovery device that enable improvement of a recovery rate of lithium while impurities are reduced in a case where lithium is recovered from a lithium ion battery calcined product (black mass).

### Solution to Problem

In order to solve the above-described problems, the present invention has any of the following aspects.
(1) A lithium recovery method including: a leaching step of adding an acidic solution containing an inorganic acid to a lithium-containing raw material; a precipitation step of neutralizing a first slurry obtained in the leaching step to obtain a precipitate substance; a solid-liquid separation step of performing solid-liquid separation on a second slurry obtained in the precipitation step; a washing step of washing a solid phase obtained in the solid-liquid separation step with a washing liquid; and a recycling step of reusing a post-washing liquid obtained in the washing step in either or both of the leaching step and the precipitation step.
(2) The lithium recovery method according to (1), in which the lithium-containing raw material is a lithium ion battery calcined product having a particle size of 1 mm or less, which is obtained by classifying a thermally decomposed product obtained by calcining a lithium ion battery at 400°C to 600°C.
(3) The lithium recovery method according to (1) or (2), in which the precipitate substance contains at least one metal selected from cobalt, nickel, and manganese.
(4) The lithium recovery method according to any one of (1) to (3), in which in the leaching step, a solid-liquid ratio (solid:liquid) of the lithium-containing raw material which is a solid component to the acidic solution which is a liquid component is 1:3 to 1:7 in terms of mass ratio.
(5) The lithium recovery method according to any one of (1) to (4), in which in the washing step, a solid-liquid ratio (solid phase:washing liquid) of the solid phase to the washing liquid is 1:2 to 1:9 in terms of mass ratio.
(6) The lithium recovery method according to any one of (1) to (5), in which a liquid phase obtained in the solid-liquid separation step is supplied in the leaching step.
(7) A lithium recovery device including: a reaction tank that includes a lithium-containing raw material supply device, an acidic solution supply device, and a neutralizing agent supply device; a solid-liquid separation tank configured to perform solid-liquid separation on a slurry; a washing tank configured to wash a solid phase recovered from the solid-liquid separation tank; and a recycling device configured to supply a post-washing liquid recovered from the washing tank to the reaction tank.
(8) The lithium recovery device according to (7), in which the reaction tank includes a leaching tank including the lithium-containing raw material supply device and the acidic solution supply device; and a neutralization tank including the neutralizing agent supply device.

### Advantageous Effects of Invention

According to the present invention, it is possible to provide a lithium recovery method and a lithium recovery device that enable improvement of the recovery rate of lithium while impurities are reduced.

### BRIEF DESCRIPTION OF DRAWINGS

[FIG. 1] A flowchart showing a lithium recovery method according to an embodiment of the present invention in a stepwise manner.
[FIG. 2] A schematic configuration view showing a lithium recovery device according to an embodiment of the present invention.

### DESCRIPTION OF EMBODIMENTS

Hereinafter, a lithium recovery method and a lithium recovery device according to an embodiment of the present invention will be described with reference to the accompanying drawings. Further, each embodiment described below is described in detail to facilitate understanding of the gist of the invention, and does not limit the present invention unless specified otherwise.

### (Lithium recovery method)

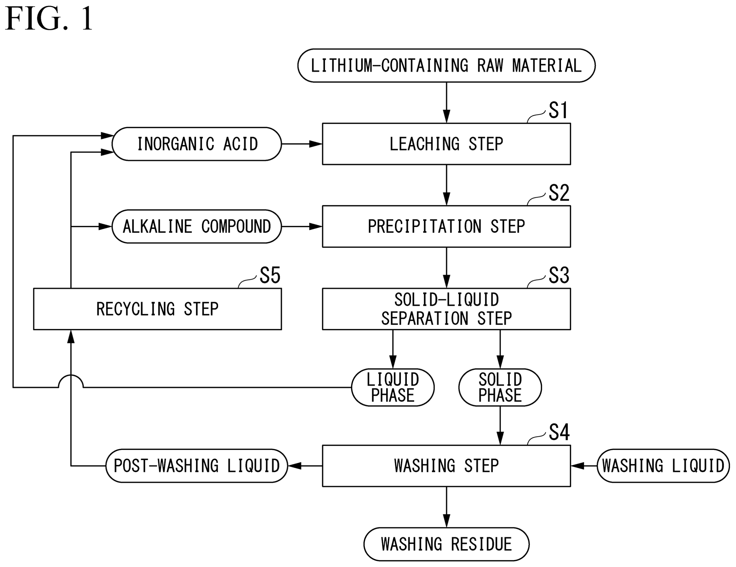

As shown in FIG. 1, a lithium recovery method of the present embodiment includes a leaching step S1 of adding an acidic solution containing an inorganic acid to a lithium-containing raw material to leach lithium into the acidic solution, a precipitation step S2 of neutralizing a first slurry obtained in the leaching step S1 to obtain a precipitate substance, a solid-liquid separation step S3 of performing solid-liquid separation on a second slurry obtained in the precipitation step S2, a washing step S4 of washing a solid phase obtained in the solid-liquid separation step S3 with a washing liquid, and a recycling step S5 of reusing a post-washing liquid obtained in the washing step S4 in either or both of the leaching step S1 and the precipitation step S2.

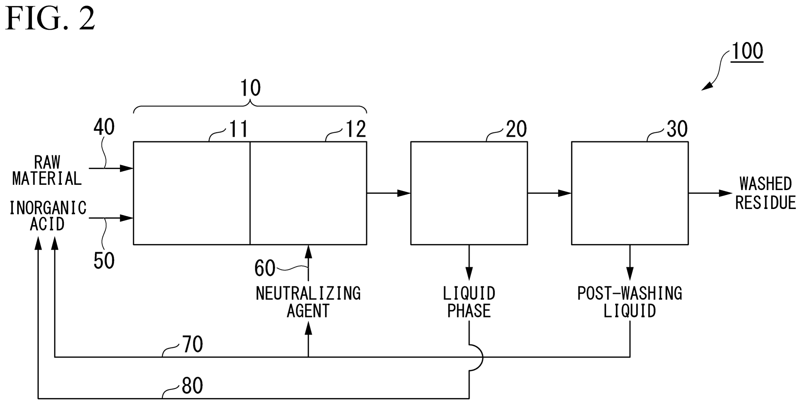

It is preferable that the lithium recovery method according to the present embodiment is performed by a lithium recovery device 100 shown in FIG. 2. The lithium recovery device 100 used in the present embodiment includes at least a reaction tank 10 that includes a lithium-containing raw material supply device 40, an acidic solution supply device 50, and a neutralizing agent supply device 60, a solid-liquid separation tank 20, a washing tank 30, and a recycling device 70. In the present embodiment, the reaction tank 10 may be one tank or a tank including two tanks of a leaching tank 11 and a neutralization tank 12.

### (Leaching step: S1)

In the leaching step S1 of the present embodiment, an acidic solution containing an inorganic acid is added to the lithium-containing raw material to leach lithium into the acidic solution, and a first slurry formed of a leachate and an insoluble substance is obtained.

More specifically, examples of the lithium-containing raw material include a lithium ion battery calcined product (black mass) formed by using a lithium ion battery recovered as a recycling raw material.

The black mass used in the present embodiment can be obtained, for example, by the following method.

A positive electrode active material of the lithium ion battery contains a lithium compound such as lithium cobaltate (LiCoO₂), lithium nickelate (LiNiO₂), or lithium manganate (LiMn₂O₄). In addition, a negative electrode active material may contain a lithium compound such as lithium titanate. Further, an electrolytic solution contains a lithium compound such as lithium hexafluorophosphate (LiPF₆) or lithium tetrafluoroborate (LiBF₄).

First, the lithium ion battery is placed in a thermal decomposition furnace, preferably calcined, for example, in a temperature range of about 400°C to 600°C for about 30 minutes to 5 hours in a non-oxidizing atmosphere such as a superheated steam atmosphere or a nitrogen gas atmosphere, and thermally decomposed.

By such thermal decomposition, an organic fluorine compound which is a fluorine component contained in the lithium ion battery is thermally decomposed to generate hydrogen fluoride. In addition, lithium hexafluorophosphate, lithium tetrafluoroborate, or the like as the electrolyte is thermally decomposed to generate hydrogen fluoride and phosphoric acid.

Further, metal oxides such as manganese oxide, nickel oxide, and cobalt oxide, and lithium fluoride (LiF) are generated from the generated hydrogen fluoride and a lithium compound contained in the electrode active material, for example, lithium cobaltate, lithium nickelate, or lithium manganate.

In addition, lithium phosphate (Li₃PO₄) is also generated by the reaction of phosphoric acid generated by the thermal decomposition with the lithium compound. In addition, lithium carbonate (Li₂CO₃) and the like are also generated by the reaction of carbon dioxide generated in the process of thermal decomposition with the lithium compound.

As described above, a thermally decomposed product containing a lithium compound such as lithium fluoride, lithium phosphate, or lithium carbonate is generated by the thermal decomposition of the electrode active material or the electrolyte contained in the lithium ion battery.

Next, the obtained thermally decomposed product containing a lithium compound is pulverized. By the pulverization, the electrode active material after thermal decomposition is formed into a finely pulverized product having a particle diameter of about less than 1 mm. For example, a shearing type pulverizer such as a biaxial shearing pulverizer or an impact type pulverizer such as a hammer mill can be used alone or in combination for the pulverization.

Next, the pulverized product of the thermally decomposed product containing a lithium compound is classified using a sieve having an appropriate opening size, and is sieved into, for example, fine particles having a size of less than 1 mm and preferably 0.5 mm or less and coarse particles having a size larger than the fine particles. For example, a vibrating sieve having an opening size of 0.1 mm to 1.0 mm and preferably 0.1 mm to 0.5 mm may be used for sieving in the classification. By such classification, a metal lump of an exterior case and a metal foil derived from a current collector, which are contained in the coarse particles, and a thermally decomposed product of the electrode active material, which is contained in the fine particles, can be classified.

A lithium ion battery calcined product (black mass) containing the lithium compound of the present embodiment and having a particle size of 1 mm or less can be obtained by the above-described step.

In the leaching step S1 of the present embodiment, the lithium ion battery calcined product (black mass) containing the above-described lithium compound is used as the lithium-containing raw material.

In the present embodiment, the above-described black mass is put into the reaction tank 10 made of a resin, an acidic solution containing water and an inorganic acid is further put into the reaction tank 10, and the reaction tank 10 is stirred and shaken. Further, the black mass may be subjected to fine pulverization or abrasion pulverization in order to improve the reaction efficiency in the reaction tank 10.

As the inorganic acid, it is preferable to use one or more selected from the group consisting of sulfuric acid, hydrochloric acid, and nitric acid.

In the reaction tank 10, the black mass which is a lithium-containing raw material and an acidic solution containing an inorganic acid are mixed, and lithium is leached into the acidic solution.

In the first leaching step S1, the acidic solution may further contain water.

As the condition of the pH of the acidic solution for leaching lithium into the acidic solution, the pH thereof is preferably 6 or less and more preferably in a range of 1 to 3.

In a case where the pH of the acidic solution is 6 or less, a lithium compound that is sparingly soluble in water, such as lithium carbonate, lithium fluoride, or lithium aluminate, is dissolved as shown in Formulae (1) to (3), and lithium can be leached into the acidic solution.

Li₂CO₃ + H₂SO₄ → Li₂SO₄ (liquid phase) + H₂O (liquid phase) + CO₂ (gas) (1)

2LiF + H₂SO₄ → Li₂SO₄ (liquid phase) + 2HF (liquid phase) (2)

2LiAlO₂ + 4H₂SO₄ → Li₂SO₄ (liquid phase) + Al₂(SO₄)₃ + 4H₂O (3)

In the present embodiment, it is preferable to use an acidic solution containing sulfuric acid particularly as the acidic solution and more preferable to perform the leaching step S1 under the conditions of a temperature of 20°C to 80°C and a pH of 1 to 3. Lithium fluoride and lithium aluminate, which are sparingly soluble in water, can be dissolved under such conditions to obtain an acidic solution into which lithium has been leached.

Other lithium compounds that are sparingly soluble in water are also easily dissolved under the above-described conditions, and the recovery rate of lithium from the black mass can be improved.

In the leaching step S1, the solid-liquid ratio (solid:liquid) of the black mass (solid component) to the acidic solution (liquid component) containing an inorganic acid is not particularly limited, but can be set to 1:3 to 1:7 in terms of the mass ratio. The solid-liquid ratio is more preferably 1:4 to 1:5 in terms of the mass ratio.

In a case where the solid-liquid ratio is less than 1:3, the flowability is reduced, and thus there is a concern that the recovery rate of lithium is reduced. Meanwhile, the recovery rate of lithium does not change even in a case where the solid-liquid ratio is greater than 1:7, and the upper limit thereof may be 1:7 from the viewpoint of cost reduction.

The shaking time of the reaction tank 10 may be, for example, in a range of 30 minutes or longer and 20 hours or shorter. In a case where the shaking time is shorter than 30 minutes, there is a concern that the lithium compound, which is contained in the black mass and sparingly soluble in water, does not sufficiently react with the inorganic acid. In addition, even in a case where the shaking time is set to be longer than 20 hours, there is a concern that the reaction does not proceed any further and the treatment efficiency is degraded.

In the leaching step S1 of the present embodiment, the leaching of lithium contained in the black mass into an acidic solution proceeds, and metal components such as cobalt, manganese, and nickel are also dissolved in the acidic solution.

### (Precipitation step: S2)

Next, in the precipitation step S2, the first slurry obtained in the leaching step S1 is neutralized to obtain a precipitate substance.

In the present embodiment, it is preferable that the neutralizing agent is added from the neutralizing agent supply device 60 to the reaction tank 10 in which the first slurry formed of the leachate and the insoluble substance is held.

In the present embodiment, it is more preferable that the leaching step S1 and the precipitation step S2 are performed in the same reaction tank 10 in order to avoid the loss of lithium contained in the first slurry.

Examples of the neutralizing agent include alkaline compounds such as calcium hydroxide and sodium hydroxide. Among these, calcium hydroxide is preferable from the viewpoint of being inexpensive and reducing the sodium load in the subsequent step.

In the precipitation step S2, it is preferable that the pH of the first slurry is set to 9 to 11 by adding the neutralizing agent to the first slurry.

By setting the pH of the first slurry to be in the above-described range, metal components such as cobalt, manganese, and nickel contained in the leachate of the first slurry are deposited and precipitated. Further, in a case where the pH thereof is less than 9, there is a concern that the metal components are not sufficiently deposited.

According to the precipitation step S2 of the present embodiment, metal components such as cobalt, manganese, and nickel are deposited as precipitate substances, and a second slurry that is precipitated is obtained.

### (Solid-liquid separation step: S3)

In the solid-liquid separation step S3 (first solid-liquid separation) of the present embodiment, the second slurry obtained in the precipitation step S2 is separated into a liquid phase and a solid phase in the solid-liquid separation tank 20.

It is preferable that the solid-liquid separation tank 20 includes a filtration device, and the second slurry obtained in the precipitation step S2 may be filtered to be separated into a solid phase and a liquid phase using the filtration device. Each of a solid phase that contains a precipitate substance containing cobalt, manganese, nickel, and the like and insoluble matter of the leaching step S1, and a liquid phase in which lithium is dissolved in any form of lithium sulfate, lithium chloride, and lithium nitrate can be obtained by the above-described solid-liquid separation step S3. The liquid phase contains lithium, and may be a solution containing cobalt, nickel, and manganese that have not been completely precipitated in the precipitation step S2.

### (Washing step: S4)

In the washing step S4 of the present embodiment, the solid phase separated in the solid-liquid separation step S3 can be washed with a washing liquid in the washing tank 30 to obtain a washed slurry.

In the solid phase separated in the solid-liquid separation step S3, lithium is attached to the surface of the solid phase. In the present embodiment, the solid phase is washed to transfer lithium attached to the surface of the solid phase to the washing liquid.

As the washing liquid, water, dilute sulfuric acid, lime water, or the like can be used. Further, the concentration of the dilute sulfuric acid is preferably 0.1 mol/L or less, and the concentration of the lime water is preferably 0.1% by mass or less.

In the washing tank 30, the solid phase separated in the solid-liquid separation step S3 may be washed by immersing the solid phase in a washing liquid.

In the washing tank 30, the solid-liquid ratio (solid phase:washing liquid) of the solid phase to the washing liquid is preferably 1:2 to 1:9 in terms of the mass ratio. The solid-liquid ratio thereof is more preferably 1:2 to 1:4 in terms of the mass ratio.

In a case where the solid-liquid ratio is in the above-described range, the lithium attached to the surface of the solid phase can be removed, and the lithium remaining in the solid phase can be recovered. In a case where the solid-liquid ratio is less than 1:2, the flowability of the slurry formed of the solid phase and the washing liquid is low, and the lithium attached to the surface of the solid phase tends to be difficult to transfer to the washing liquid. Meanwhile, the amount of lithium that can be recovered even in a case where the solid-liquid ratio is greater than 1:9 does not change, and the upper limit thereof is preferably 1:9 from the viewpoint of cost reduction.

Further, the washing step S4 may be performed in the solid-liquid separation tank 20 used in the solid-liquid separation step S3 instead of the washing tank 30.

### (Recycling step: S5)

In the recycling step S5 of the present embodiment, the post-washing liquid obtained in the washing step S4 is reused in either or both of the leaching step S1 and the precipitation step S2.

First, the washed slurry obtained in the washing step S4 is subjected to solid-liquid separation (second solid-liquid separation) into a post-washing liquid and a washing residue. The solid-liquid separation may be carried out by filtering the washed slurry using a filteration device to separate the slurry into a post-washing liquid and a washing residue.

Next, the post-washing liquid is supplied to the reaction tank 10 using the recycling device 70.

In a case where the post-washing liquid is supplied to the reaction tank 10 and reused in the leaching step S1, the post-washing liquid can be used instead of water used in the acidic solution containing an inorganic acid.

In a case where the post-washing liquid is supplied to the reaction tank 10 and reused in the precipitation step S2, the post-washing liquid can be added to the first slurry together with the neutralizing agent via the neutralizing agent supply device 60.

In this case, a necessary amount of liquid is portioned out from the post-washing liquid to the first slurry obtained in the leaching step S1 and reused in the leaching step S1, and the residual liquid of the post-washing liquid may be reused in the precipitation step S2.

That is, in the lithium recovery method including the recycling step S5 according to the present embodiment, the post-washing liquid containing lithium recovered in the washing step S4 can be used in either or both of the second and subsequent leaching step S1 and the precipitation step S2.

According to the recycling step S5 of the present embodiment, the lithium contained in the black mass is prevented from being discharged to the outside of the system of the lithium recovery device 100 in a form other than the form recovered as the lithium leachate, and the recovery rate of lithium can be improved.

In addition, according to the recycling step of the present embodiment, the liquid discharged to the outside of the system of the lithium recovery device 100 is only the liquid phase containing lithium, and the treatment cost of the discharge liquid can be reduced.

Further, in the present embodiment, the liquid phase obtained in the solid-liquid separation step S3 (first solid-liquid separation) may be supplied to the leaching step S1 via a liquid phase supply device 80.

In a case where the liquid phase obtained in the solid-liquid separation step S3 is supplied to the leaching step S1 and the second and subsequent leaching step S1 is carried out, the lithium concentration in the second and subsequent liquid phase can be increased.

In the above-described embodiment, the leaching step S1 and the precipitation step S2 are performed in one reaction tank 10. As another embodiment, the leaching step S1 and the precipitation step S2 may be performed using the reaction tank 10 including two tanks of the leaching tank 11 and the neutralization tank 12.

In this case, the leaching tank 11 includes the lithium-containing raw material supply device 40 and the acidic solution supply device 50, and the neutralization tank 12 includes the neutralizing agent supply device 60. Further, the precipitation step S2 may be performed by moving the first slurry generated in the leaching tank 11 in the leaching step S1 to the neutralization tank 12 and adding a neutralizing agent to the first slurry from the neutralizing agent supply device 60.

In a case where the reaction tank 10 includes the leaching tank 11 and the neutralization tank 12, it is preferable to supply the post-washing liquid to either or both of the leaching tank 11 and the neutralization tank 12 using the recycling device 70 and recycle the post-washing liquid.

In any of the embodiments of the present invention described above, the solid-liquid separation is not performed between the leaching step S1 and the precipitation step S2, and the loss of lithium remaining in the solid residue after the solid-liquid separation can be prevented to improve the recovery rate of lithium from the black mass.

### (Lithium recovery device)

As shown in FIG. 2, the lithium recovery device 100 of the present embodiment includes at least the reaction tank 10 including the lithium-containing raw material supply device 40, the acidic solution supply device 50, and the neutralizing agent supply device 60, the solid-liquid separation tank 20, the washing tank 30, and the recycling device 70.

Further, the reaction tank 10 may be one tank or a tank including two tanks of the leaching tank 11 and the neutralization tank 12.

The reaction tank 10 (leaching tank 11) of the present embodiment may be any reaction tank as long as the reaction tank can leach lithium from the lithium-containing raw material using one or more inorganic acids selected from the group consisting of sulfuric acid, hydrochloric acid, and nitric acid. In addition, the reaction tank 10 (neutralization tank 12) of the present embodiment may be any reaction tank as long as the reaction tank can neutralize the first slurry containing a lithium leachate. The solid-liquid separation tank 20 may be a separation device, for example, a filtration device, which performs solid-liquid separation on the second slurry after neutralization. The washing tank 30 may have a configuration in which the surface of the solid phase to which lithium is attached is washed and the lithium can be transferred to the washing liquid. The recycling device 70 may include a post-washing liquid feeding device that supplies a post-washing liquid containing lithium to the reaction tank.

### [Examples]

The effect of the lithium recovery method according to the embodiment of the present invention was verified.

### (Lithium-containing raw material)

A lithium ion battery cell was heated at 500°C to be thermally decomposed. This calcined product was pulverized and classified to recover a lithium ion battery calcined product (black mass) having a particle diameter of 0.5 mm or less.

Table 1 lists the composition of the obtained black mass. The composition of the black mass was measured by inductively coupled plasma atomic emission spectroscopy (ICP-AES) after acid dissolution of the black mass.

**[Table 1]**

| Element | C | Li | Co | Ni | Mn | Al | F |
|---|---|---|---|---|---|---|---|
| Content (% by mass) | 40 | 3.1 | 8 | 10 | 4.3 | 7.4 | 4.3 |

### (Test Example 1)

The black mass and an acidic solution containing sulfuric acid and water were supplied to the reaction tank 10, and the mixture was stirred in the reaction tank 10 for 60 minutes under the conditions of a pH of 1.8 to 1.9 and a temperature of 25°C to leach lithium in the black mass into the acidic solution, thereby obtaining a first slurry (leaching step S1). Here, the solid-liquid ratio (solid:liquid) of the black mass (solid) to the acidic solution (liquid) was set to 1:7.

The pH is obtained by measuring the pH during lithium leaching with a pH meter (manufactured by DKK-TOA Corporation).

Next, calcium hydroxide was added to the reaction tank 10, and the first slurry was neutralized under the conditions of a pH of 9 or greater and a temperature of 25°C to deposit and precipitate cobalt, manganese, nickel, and aluminum contained in the leachate, thereby obtaining a second slurry (precipitation step S2).

Next, the second slurry was filtered by a decompression filtration device (solid-liquid separation tank 20) to be separated into a solid phase and a liquid phase (solid-liquid separation step S3). Water (washing liquid) was added to the decompression filtration device in which the solid phase remained such that the solid-liquid ratio (solid phase:washing liquid) reached 1:3 in terms of the mass ratio, and the mixture was subjected to decompression filtration again to obtain a washed slurry in which lithium attached to the surface of the solid phase was transferred to the washing liquid (washing step S4).

The lithium concentration in the washing residue obtained by solid-liquid separation of the washed slurry after the washing step S4 was 0.2% by mass. In addition, the lithium concentration in the first post-washing liquid obtained by solid-liquid separation of the washed slurry was 7 g/L.

Further, the lithium concentration in the washing residue was determined by washing the washing residue with water and measuring the lithium concentration of the washing liquid using ICP (iCAP 7600 Duo, manufactured by Thermo Fisher Scientific, Inc.). The lithium concentration in the post-washing liquid was measured using ICP (iCAP 7600 Duo, manufactured by Thermo Fisher Scientific, Inc.).

### (Example 1)

The black mass and an acidic solution containing sulfuric acid and a lithium-containing liquid were supplied to the reaction tank 10, and lithium in the black mass was leached into the acidic solution in the reaction tank 10 under the conditions of a pH of 1.8 to 1.9 and a temperature of 25°C to obtain a first slurry (leaching step S1). Here, the solid-liquid ratio (solid:liquid) of the black mass (solid) to the acidic solution (liquid) was set to 1:7.

The lithium concentration in the lithium-containing liquid was set to 7 g/L. This is the same concentration as the lithium concentration in the first post-washing liquid obtained in Test Example 1. The recycling step of the present invention was simulated by using such a lithium-containing liquid in the acidic solution instead of the water used in Test Example 1.

Next, calcium hydroxide was added to the reaction tank 10, and the first slurry was neutralized in the reaction tank 10 under the conditions of a pH of 9 or greater and a temperature of 25°C, and cobalt, manganese, nickel, and aluminum contained in the leachate were deposited and precipitated to obtain a second slurry (precipitation step S2).

Next, the second slurry was filtered using a decompression filtration device (solid-liquid separation tank 20) to be separated into a solid phase and a liquid phase (solid-liquid separation step S3). Further, water (washing liquid) was added to the decompression filtration device in which the solid phase remained, the solid-liquid ratio (solid phase:washing liquid) was set to 1:2 in terms of the mass ratio, and the solid phase was washed to obtain a washed slurry in which lithium attached to the surface of the solid phase was transferred to the washing liquid (washing step S4).

The lithium concentration in the washing residue obtained by solid-liquid separation of the washed slurry after the washing step S4 was 0.8% by mass. The results thereof are listed in Table 2.

Further, the lithium concentration in the second post-washing liquid obtained by solid-liquid separation of the washed slurry after the washing step S4 was 7.0 g/L.

### (Example 2)

The leaching step S1, the precipitation step S2, the solid-liquid separation step S3, and the washing step S4 were performed under the same conditions as in Example 1 except that the solid-liquid ratio (solid:liquid) of the black mass (solid) to the acidic solution (liquid) in the leaching step S1 of Example 1 was changed to 1:3.

The lithium concentration in the washing residue obtained by solid-liquid separation of the washed slurry after the washing step S4 was 0.8% by mass. The results thereof are listed in Table 2.

The lithium concentration in the second post-washing liquid obtained by solid-liquid separation of the washed slurry after the washing step S4 was 4.7 g/L.

### (Example 3)

The leaching step S1, the precipitation step S2, the solid-liquid separation step S3, and the washing step S4 were performed under the same conditions as in Example 1 except that the solid-liquid ratio (solid:liquid) of the black mass (solid) to the acidic solution (liquid) in the leaching step S1 of Example 1 was set to 1:3 and the solid-liquid ratio (solid phase:washing liquid) in the washing step S4 was changed to 1:5 in terms of the mass ratio.

The lithium concentration in the washing residue obtained by solid-liquid separation of the washed slurry after the washing step S4 was 0.4% by mass. The results thereof are listed in Table 2.

Further, the lithium concentration in the second post-washing liquid obtained by solid-liquid separation of the washed slurry after the washing step S4 was 3.0 g/L.

### (Example 4)

The leaching step S1, the precipitation step S2, the solid-liquid separation step S3, and the washing step S4 were performed under the same conditions as in Example 1 except that the solid-liquid ratio (solid phase:washing liquid) in the washing step S4 of Example 1 was changed to 1:9 in terms of the mass ratio.

The lithium concentration in the washing residue obtained by solid-liquid separation of the washed slurry after the washing step S4 was 0.3% by mass. The results thereof are listed in Table 2.

The lithium concentration in the second post-washing liquid obtained by solid-liquid separation of the washed slurry after the washing step S4 was 1.6 g/L.

**[Table 2]**

| | Leaching condition | | | | Neutralization condition | Washing condition | Washing residue |
|---|---|---|---|---|---|---|---|
| | Leachate | pH | Solid-liquid ratio | Temperature °C | pH | Solid-liquid ratio | Li content (% by mass) |
| Examples 1 | Li liquid | 1.8-1.9 | 1:7 | 25 | 9 < | 1:2 | 0.8 |
| Examples 2 | Li liquid | 1.8-1.9 | 1:3 | 25 | 9 < | 1:2 | 0.8 |
| Examples 3 | Li liquid | 1.8-1.9 | 1:3 | 25 | 9 < | 1:5 | 0.4 |
| Examples 4 | Li liquid | 1.8-1.9 | 1:7 | 25 | 9 < | 1:9 | 0.3 |

### (Comparative Example 1)

The leaching step S1, the precipitation step S2, and the solid-liquid separation step S3 were performed under the same conditions as in Example 1.

The lithium content in the solid phase obtained in the solid-liquid separation step S3 was 2.0% by mass. The results thereof are listed in Table 3.

That is, it was confirmed that in a case where the washing step S4 of washing the solid phase obtained in the solid-liquid separation step S3 and the recycling step S5 of recycling the post-washing liquid are not carried out, since a large amount of lithium remains in the solid phase after the solid-liquid separation step, the loss of lithium constantly occurs, and thus the recovery rate of lithium decreases.

**[Table 3]**

| | Leaching condition | | | | Neutralization condition | Leaching residue |
|---|---|---|---|---|---|---|
| | Leachate | pH | Solid-liquid ratio | Temperature °C | pH | Li content (% by mass) |
| Comparative Example 1 | Li liquid | 1.8-1.9 | 1:7 | 25 | 9 < | 2.0 |

As shown in Examples 1 to 4, it was found that the concentration of lithium discharged to the outside of the system of the lithium recovery device 100 of the present invention, that is, the concentration of lithium in the washing residue obtained by solid-liquid separation of the washed slurry is low by carrying out the washing step S4 and the recycling step S5 of the present invention, and the recovery rate of lithium is improved.

In Example 2, it was found that in a case where the solid-liquid ratio in the leaching step S1 is 1:3 or less, there is no problem in handling the leaching step, and the recycling of the post-washing liquid can be repeated.

In Examples 1, 3, and 4, it was found that the lithium concentration in the second post-washing liquid is reduced by increasing the amount of the washing liquid in the washing step S4. That is, it was found that in a case where the amount of the washing liquid in the washing step S4 is increased, the lithium attached to the surface of the solid phase is more effectively transferred to the washing liquid to be used in the recycling step S5, and the concentration of lithium discharged to the outside of the system of the lithium recovery device 100 according to the present invention can be reduced.

### INDUSTRIAL APPLICABILITY

According to the lithium recovery method and the lithium recovery device of the present invention, it is possible to reduce the loss of lithium to be discharged while reducing impurities such as cobalt, manganese, and nickel, and to improve the recovery rate of lithium.

### REFERENCE SIGNS LIST

100 Lithium recovery device
10 Reaction tank
11 Leaching tank
12 Neutralization tank
20 Solid-liquid separation tank
30 Washing tank
40 Lithium-containing raw material supply device
50 Acidic solution supply device
60 Neutralizing agent supply device
70 Recycling device

## Claims

1. A lithium recovery method comprising:
a leaching step of adding an acidic solution containing an inorganic acid to a lithium-containing raw material;
a precipitation step of neutralizing a first slurry obtained in the leaching step to obtain a precipitate substance;
a solid-liquid separation step of performing solid-liquid separation on a second slurry obtained in the precipitation step;
a washing step of washing a solid phase obtained in the solid-liquid separation step with a washing liquid; and
a recycling step of reusing a post-washing liquid obtained in the washing step in either or both of the leaching step and the precipitation step.

2. The lithium recovery method according to Claim 1,
wherein the lithium-containing raw material is a lithium ion battery calcined product having a particle size of 1 mm or less, which is obtained by classifying a thermally decomposed product obtained by calcining a lithium ion battery at 400°C to 600°C.

3. The lithium recovery method according to Claim 1,
wherein the precipitate substance contains at least one metal selected from cobalt, nickel, and manganese.

4. The lithium recovery method according to Claim 1,
wherein in the leaching step, a solid-liquid ratio (solid:liquid) of the lithium-containing raw material which is a solid component to the acidic solution which is a liquid component is 1:3 to 1:7 in terms of mass ratio.

5. The lithium recovery method according to Claim 1,
wherein in the washing step, a solid-liquid ratio (solid phase:washing liquid) of the solid phase to the washing liquid is 1:2 to 1:9 in terms of mass ratio.

6. The lithium recovery method according to Claim 1,
wherein a liquid phase obtained in the solid-liquid separation step is supplied in the leaching step.

7. A lithium recovery device comprising:
a reaction tank that includes a lithium-containing raw material supply device, an acidic solution supply device, and a neutralizing agent supply device;
a solid-liquid separation tank configured to perform solid-liquid separation on a slurry;
a washing tank configured to wash a solid phase recovered from the solid-liquid separation tank; and
a recycling device configured to supply a post-washing liquid recovered from the washing tank to the reaction tank.

8. The lithium recovery device according to Claim 7,
wherein the reaction tank includes a leaching tank including the lithium-containing raw material supply device and the acidic solution supply device; and a neutralization tank including the neutralizing agent supply device.
